# EUROPEAN PATENT APPLICATION

(11) **EP 0 902 505 A2**
(43) Date of publication of application: **17.03.1999**
(21) Application number: 98117075.6
(22) Date of filing: 09.09.1998
(51) Int. Cl.: H01R 13/523

(54) **Sealed electrical and/or optical connector**

(30) Priority: 09.09.1997 GB 9719078; 12.03.1998 GB 9805168
(71) Applicant: Hydro-Bond Engineering Limited, Aberdeen, AB23 8EF (GB)
(72) Inventor: Holmes, Robert, Skene, Aberdeenshire, AB32 6QN (GB); Meikle, Duncan James, Whitegairns, Aberdeen, AB23 8UH (GB)
(74) Representative: Pattullo, Norman

(57) **Abstract**

An electrical and/or optical connector is provided which is particularly, but not exclusively, for use underwater. The connector comprises male and female portions (100, 400, 10, 200, 300) wherein the male portion (100, 400) is provided with at least one probe (120) and the female portion (10, 200, 300) is provided with at least one socket. A moveable shuttle (12, 110) is provided on the male (100, 400) and/or female (10, 200, 300) portions to seal the probe (120) and/or sockets to allow the connector to be mated and/or disconnected underwater. The portions may also be left disconnected underwater when "live". The portions typically contain an insulating fluid and are typically provided with pressure compensation means. There is also provided a housing for an electrical and/or optical connector which is particularly, but not exclusively, for use with a remotely operated vehicle.

## Description

The present invention relates to an electrical and/or optical connector and in particular, but not exclusively, to such a connector for use underwater.

Electrical and/or optical pin-and-socket connectors are known in the art. In keeping with common terminology, the socket is generally referred to as the female connector and correspondingly, the pin is referred to as the male connector.

Electrical and/or optical connectors have a wide variety of applications. A number of such applications include underwater use such as in the oil industry. Electrical, optical and electro-optical hybrid connectors are often required to he mated and disconnected underwater. Occasionally, the male and/or female connectors are left disconnected underwater for extended periods of time.

Use of electrical connectors underwater presents a number of problems. Notwithstanding the fact that water is a conductor, the metal contacts which are used to give good electrical contact are vulnerable to corrosion.

According to one aspect of the present invention there is provided an electrical and/or optical connector comprising a male portion and a female portion, the male portion being provided with at least one contact probe and the female portion being provided with at least one socket, whereby the male portion and the female portion interengage resulting in electrical and/or optical contact between them, each portion containing an insulating fluid.

According to another aspect of the present invention there is provided an electrical and/or optical connector comprising a male portion and a female portion, the male portion being provided with at least one contact probe and the female portion being provided with at least one socket, at least one of the male and female portions being provided with a moveable shuttle for sealing the respective portion.

The shuttle can be provided in the male portion for sealing the probe or in the female portion, or both. Preferably, a shuttle is resiliently biased to close an opening in the female portion. Preferably also, at least one fluid-tight seal (such as an O-ring) is provided to prevent contaminants from entering the female portion. Typically, the shuttle is forced backwards when the probe of the male portion is inserted into the socket of the female portion through the fluid tight seal to make electrical and/or optical contact, the seal thereafter abutting an outer surface of the probe of the male portion thereby preventing contaminants from entering the connector.

A shuttle in the male portion is typically resiliently biased to close an opening in the male portion, and at least one fluid-tight seal may be provided at, or near, said opening to resist contamination of the male portion when the portions are disconnected. The shuttle typically provides an axial wiper for removing contaminants from the probe when the shuttle is forced backwards as the probe of the male portion is inserted into the socket of the female portion. The shuttle in the female portion may also be provided with a wiper for the socket.

According to a third aspect of the present invention there is provided an electrical and/or optical connector comprising a male portion and a female portion, the male portion being provided with at least one contact probe and the female portion being provided with at least one socket, the connector including a visual indicator indicating to a user that electrical and/or optical contact has been made.

The probe of the male portion may be inserted into the socket of the female portion to make electrical and/or optical contact. Typically, one of the female and male portions is provided with a shoulder which abuts against a stop on the other of the female and male portions such that the visual indication is generated.

Typically, the moveable shuttle for the female portion includes a piston which is resiliently biased to engage the fluid-tight seals when in the disconnected condition. The seals typically comprise O-rings and preferably, two O-rings are located at, or near, the opening of the female portion.

Typically, the piston is biased by way of a spring. Typically also, the piston is housed within a piston chamber defined by one or more rigid walls. Preferably, the piston chamber is at least partially filled with a dielectric fluid. Preferably also, the rigid walls include apertures to allow the dielectric fluid to flow out of, or into, the piston chamber. Typically, as the piston is forced backwards, dielectric fluid contained in the piston chamber is expunged from the piston chamber through the apertures into an outer chamber.

Typically, the outer chamber includes a flexible membrane forming one of the boundaries of the outer chamber.

Typically, the female portion is provided with at least one vent hole, the holes allowing pressure (eg seawater) outwith the female portion to bear against the flexible membrane, thereby creating a pressure balance at the membrane. The seawater (or other fluid) is typically prevented from entering the outer chamber by the flexible membrane, thereby providing a pressure balance at the membrane.

The apertures and chambers resist entry of seawater into the connector which may cause a short-circuit between two or more of the electrical circuits. The introduction of the chambers and apertures (the apertures being preferably offset) makes it very difficult for a continual conducting path to be made from one socket or probe to another.

Optionally, a further fluid-tight seal may be provided at the inner end of the piston.

The female portion may include a contact pad which is located within a contact chamber within the female portion. Preferably, the contact chamber is isolated from the other chambers by a fluid-tight seal. In this particular embodiment, the contact pad is typically electrically connected to external contacts by a central conductor which is housed within a conductor chamber. The conductor chamber is typically filled with a dielectric and is preferably isolated from all other chambers. This particular configuration reduces the ingress of contaminants and furthermore reduces the possibility of such contaminants from creating a short-circuit by isolating each chamber from one another.

Typically, the moveable shuttle for the male portion includes two fluid-tight seals at the opening to the male portion. Typically, the seals comprise O-rings and preferably, two O-rings are provided at, or near, the opening. Preferably, the O-rings are rectangular in cross-section.

Preferably, the probe(s) of the male portion is substantially covered in an insulating material. Preferably, the insulating material covers the tip of the probe and extends therefrom. Preferably, a gap is formed in the insulation such that electrical contact may be made with the socket of the female portion. The use of an insulating material has the advantage that the probe is protected from the corrosive effects of the seawater and furthermore, the insulating material provides for an enhanced fluid-tight seal in conjunction with the O-rings.

In addition to offering protection from corrosion, the combination of the shuttle and fluid-tight seals allows the male and/or female portions to be left "live" underwater for extended periods of time. As the portions are filled with dielectric and electrically insulated both internally and from external sources, the electrical power to the connector may be left switched on when the portions are disconnected. The portions may also be left live whilst they are being mated, but it is preferable for the male portion not to be live whilst being mated.

Typically, the probes of the male portion are encased within a flexible membrane which defines a chamber. Preferably, the chamber is filled with a dielectric fluid. Alternatively, the flexible membrane is housed within the shuttle. This alternative substantially reduces the cost and complexity of the design, and may be used where the displacement of fluid within the male portion during mating and disconnection is substantially negligible.

Typically, the male portion is provided with at least one vent hole which allows pressure from outwith the male portion to bear against the flexible membrane, thereby creating a pressure balance at the membrane interface. Where the membrane is within the shuttle, a chamber is provided on each side of the membrane. This allows the membrane to flex and thus accommodate fluid which is displaced during mating and disconnection. In addition, this allows pressure equalisation between the chambers.

Optionally, the O-rings may be of varying cross-sectional profile to provide a fluid tight seal which is compatible with the insulation in the male probes or the piston of the female portion. Such profiles typically include triangular, rectangular, square and other irregular shapes.

Typically, a front portion of the male portion is provided with at least one aperture to allow debris collected in the front portion to be removed.

According to a fourth aspect of the present invention, there is provided a housing for electrical and/or optical connectors for use with a remotely operated vehicle (ROV), the housing comprising a male portion and a female portion, the male and female portions being provided with alignment means.

The alignment means typically comprises at least one key and guide slot arrangement. Typically, a key is provided on one of the male and female portions and a guide slot on the other of the male and female portions.

Preferably, two key and guide slot arrangements are provided. The first key and slot arrangement allows for initial alignment of the male and female portions and the second key and slot arrangement allows for final alignment of the two portions. Typically, the first arrangement allows for a large variance in the alignment of the male and female portions. Typically, the second arrangement allows for accurate alignment of the male and female portions.

Preferably, the keys of the first and second arrangements are provided on the male portion, and the slots of the arrangements are provided on the female portions. Alternatively, the keys are provided on the female portion and the slots on the male portion.

According to a fifth aspect of the present invention, there is provided a housing for electrical and/or optical connectors for use with a remotely operated vehicle (ROV), the housing comprising a male portion and a female portion, the male and female portions being releasably mated by securing means.

Typically, the securing means comprises at least one latch on one of the male and female portions which engages with a corresponding groove on the other of the male and female portions. Preferably, the latch is provided on the male portion and the groove is provided on the female portion. Preferably, four latches are provided on the male portion and a circular groove is provided on the female portion. A cutout can be substituted for the groove.

The latch is typically resiliently biased in a radial direction. The latch is typically biased radially outward when provided on the male portion, and biased radially inward when provided on the female portion. Preferably, the latch has a portion which is wedge shaped.

Typically, the securing means includes a handle which is engagable with a sleeve member. The handle is preferably configured to facilitate operation by an ROV. Use of the securing means prevents unintentional disconnection of the connector if a force is applied to the connecting cables.

The sleeve member typically engages the leading edge of the wedge-shaped latch portion to facilitate release of the latch from the groove. Typically, an axial force is applied to the handle to move the sleeve member in a substantially axial direction to facilitate said release.

The sleeve member is typically biased away from the latch by a resilient member. The resilient member is typically a spring.

The securing means typically further includes a secondary release mechanism. The secondary release mechanism is used in the event that the latches fail to operate due to an obstruction or the like preventing movement of the latches.

The secondary release mechanism typically comprises at least one shear pin provided on one of the male and female portions. When a linear force is applied to the handle and the latches fall to operate, the shear pins will break at a certain force and release the male and female portions.

One of the male and female portions is typically provided with resilient seals. The resilient seals are typically flexible rubber seals. The seals allow for movement of the male or female portions to facilitate mating and disconnection by an ROV. The resilient seals are typically provided with a flange portion which extends radially to substantially isolate a space created when the male and female portions are mated. This seal substantially prevents the ingress of contaminants which may prevent the latches from operating correctly.

Embodiments of the present invention will now be described, by way of example only, with reference to the accompanying drawings in which :-
Fig. 1 is a cross-sectional view of a female portion making up a part of a connector;
Fig. 2 is a cross-sectional view of a male portion making up the other part of the connector together with the female portion of Fig. 1;
Fig. 3 is a cross-sectional view of an alternative embodiment of a female portion;
Fig. 4 is a part cross-sectional view of another alternative female portion;
Fig. 5 is a cross-sectional view of an alternative male portion for mating with the female portion of Fig. 4;
Fig. 6 is a sectional view of an outer housing which encases the male and female portions of the connector for use with a remotely operated vehicle (ROV);
Fig. 7 is an enlarged section of the encircled portion in Fig. 6 showing detail of a latching mechanism;
Figs 8 and 9 are sectional views of alternative embodiments of an outer housing for use with an ROV; and
Figs 10 to 14 are a plurality of views showing the external faces of the outer housing of Fig. 6.

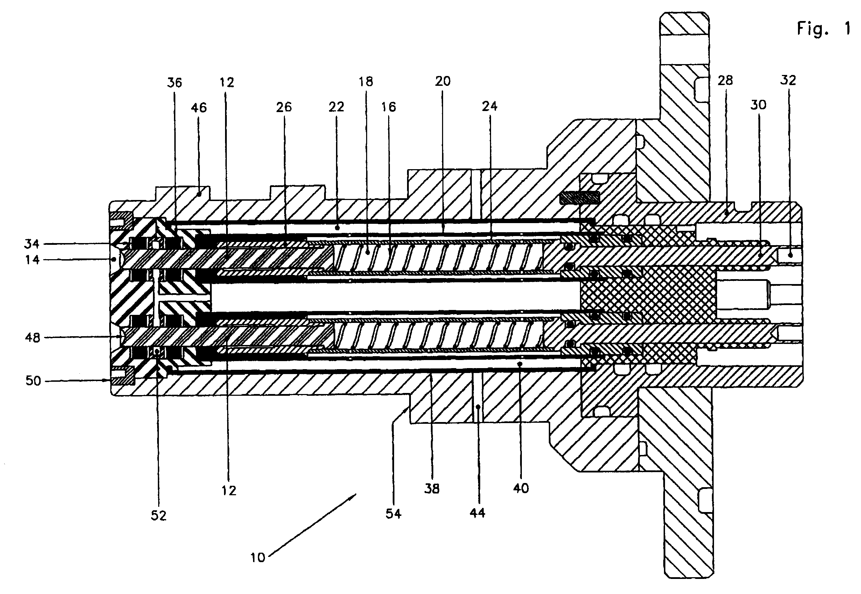

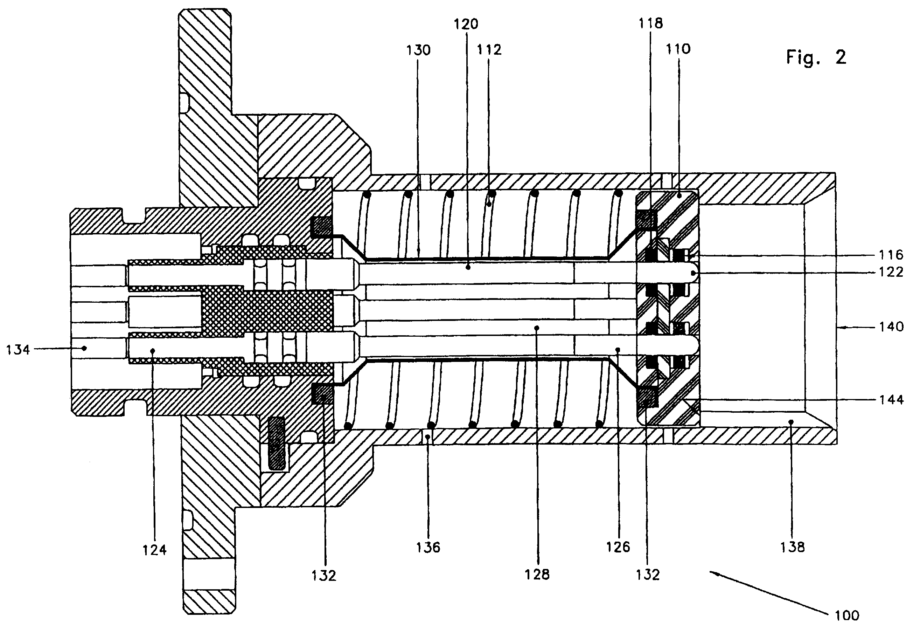

Referring firstly to Figure 1, there is shown a female portion 10 which, together with the male portion 100 shown in Fig. 2, makes up an electrical connector according to the present invention.

The female portion 10 includes a plurality of sockets, two of which can be seen in Fig. 1. The sockets are closed in a fluid-tight manner by pistons 12. It will be appreciated that the number of pistons 12 and sockets will be dependent upon the size and application of the particular connector.

The pistons 12 are resiliently biased to close openings 14 at one end of the female portion 10. The openings 14 are provided to receive probes 120 of the male portion 100. The pistons 12 are biased towards the openings by springs 16 enclosed within first chambers 18, the springs 16 urging the pistons 12 to close the openings 14.

Each first chamber 18 has rigid walls 20 which define the chamber 18 therein. The walls 20 have a plurality of apertures 22, the function of which will be described hereinafter.

An electrical conductor 24 extends from an electrical contact pad 26 located near the openings 14 to external electrical connector rods 30 having a solder pot 32 and forming part of a rear piece 28. The solder pot 32 allows the electrical circuits within the connector to be connected to an external circuit in the conventional manner.

Contained within the chamber 18 is a dielectric fluid, such as oil or grease. The purpose of the dielectric and the chamber 18 is reduce the possibility of contaminants which may enter the female portion 10 from causing a short circuit. Furthermore, the dielectric also prevents any contaminants from corroding the conductor 24 and/or the contact pad 26.

At or near the opening 14 is a fluid-tight seal arrangement, one being provided for each of the pistons 12. The seal arrangement includes a first seal 34 and a second seal 36 positioned inwardly of the first seal 34 with respect to the opening 14. The seals 34, 36 are conveniently the same and comprise annular rings which have a generally rectangular cross-sectional shape. The seals 34 and 36 seal against the outer circumference of each of the pistons 12 to resist ingress of contaminants through the opening 14.

The rectangular cross-section gives several advantages over traditional circular cross-sections, the most important of which being the length of the seal. Conventional O-ring seals contact at a tangential point which is restricted in size. This restriction in size leads to a less effective seal as the surface contact is not sufficient. In case of O-rings with rectangular cross-sections, the area of surface contact between the seals 34, 36 and the piston 12 is much larger. As a result, the seals 34, 36 provide a high-integrity seal which does not allow passage of fluid. This is particularly beneficial when the pistons 12 are being pushed backwards by the male portion 100.

Furthermore, providing a double seal in the form shown further reduces the risk of the ingress of contaminants into the chambers 18. The first seal 34 provides an initial fluid-tight seal against seawater and the like. In the event that fluid gets past the first seal 34, the second seal 36 provides a second barrier.

As the pistons 12 are forced backwards by the tips 122 of probes 120, the seals 34, 36 will be deformed by the contact friction between the seals 34, 36 and the piston 12. In the case of O-rings, this friction tends to deform the O-ring such that contact between the two surfaces is lost, or at least partially reduced so that contaminants may by-pass the seal. As such, contaminants are allowed into the chamber 18.

However, with the rectangular cross-section, the deformation of the seals 34, 36 will resist ingress of fluid, as the contact area is much larger and is therefore less susceptible to the deformation. It will be appreciated that the same deformation will occur when the piston 12 is returned to its original position by the resilience of the spring 16, after or during removal of the probes 120.

To further enhance the performance of the seal arrangement, a third seal (not shown) may be used. This third seal can be positioned inwardly of the contact pad 26 and can prevent any contamination which passes the seals 34, 36 from entering the chambers 18.

To provide for a pressure balance between the external pressure on the connector when submerged and the interior of the female portion 10, a flexible membrane 38 is provided. The membrane 38 provides a second, outer chamber 40 which substantially envelops the individual first chambers 18. Fluid from the first chambers 18 may flow into the outer chamber 40 via the apertures 22.

A second plurality of apertures 44 are provided in the outer casing of the female portion 10. The apertures 44 allow passage of seawater and the like towards the membrane 38. As the pressure of seawater against the membrane 38 increases, it will be deformed inwards and the dielectric fluid within the female portion 10 will flow between the chambers 18, 40 accordingly. This will ensure that the pressure outwith the female portion 10 will be balanced with the pressure within the female portion 10.

When the pistons 12 are forced backwards by the probes 120 against the force of the spring 16, fluid within the first chamber 18 will be expelled into the outer chamber 40. This increase in fluid pressure in the outer chamber 40 will cause the membrane 38 to deform and push outwards against the inflow of seawater from the apertures 44.

Fig. 2 shows a male portion 100 of the connector having an axial bore. The male portion 100 is provided with a shuttle 110 moveable in the bore of the male portion 100.

The shuttle 110 is resiliently biased by a spring 112 towards the open end of the male portion 100 to close an opening 114 in the bore of the male portion 100. The shuttle 110 includes a seal arrangement similar to that of the female portion 10 which seals the shuttle 110 against the outer surfaces of the probes 120. A first seal 116 is provided at or near side of the shuttle 110 nearest the opening 114. A second seal 118 is provided inwardly of the first seal 116 to give the same double seal as previously described.

Each probe 120 is encased within an insulating material, which covers the probe 120 from the tip 122 to the base 124, save for a gap 126 which extends around the circumference of the probe 120 and for a short axial distance along it. The gap 126 exposes an electrical contact on the probe 120 which engages the contact pad 26 in the female portion 10 in the assembled connector. At the base end 124 of each of the probes 120 is a solder pot 134 which allows electrical connection to be made to the male portion 100 in a conventional manner.

It will be appreciated that the seals 116, 118 provide a fluid-tight seal around the insulated outer face of the probe 120. This fluid-tight seal allows the male portion 100 to be mated with the female portion 10 when "live" and also allows the male portion 100 to be left disconnected, in a submerged state, without the risk of contamination entering the male portion 100 and causing corrosion or short circuits.

The probes 120 are electrically insulated from each other by a chamber 128 located in the shuttle 110. The chamber 128 is defined by a flexible membrane 130 and is filled with a dielectric fluid as in the female portion 10. The membrane 130 is held in position by retainer clips 132.

The pressure balance outwith and within the male portion 100 is controlled in much the same manner as the female portion 10. Apertures 136 in the outer casing of the male portion 100 allow seawater and the like to enter the annulus between the outer casing and the chamber 128.

As the shuttle 110 is forced backwards when the male and female portions 100, 10 are mated, the membrane 130 is forced outwards into the annulus and pushes against the water pressure in the annulus. This balances the pressure in the chamber 128 with the external pressure of the seawater.

The mating sequence will now be described with reference to Figs 1 and 2. A key 46 on the female portion 10 is slidably located within a keyway 138 on the male portion 100. The key and keyway arrangement 46, 138 provides an initial alignment of the portions 10, 100.

Further axially applied force moves the tip 122 of each probe 120 through an aperture 14 and into contact with a concave surface 48 on each of the pistons 12. These concave surfaces 48 are designed to minimise the amount of seawater which is trapped at this interface as the tips 122 fit snugly into the concave surfaces 48, expelling seawater. At the same time, the front portion 50 of the female portion 10 contacts the shuttle 110 of the male portion 100 and pushes the shuttle 110 backwards, thereby exposing more of the probe 120. As the probe 120 is exposed, the seals 116, 118 wipe the outer surface of any contaminants as the shuttle 110 moves backwards.

The force of the tips 122 of the probes 120 pushing against the concave surfaces 48 of the pistons 12 forces the pistons 12 inwards into the female portion 10 against the force of the springs 16. As the probes 120 pass through the seal 34, the probe 120 is again wiped clean of any contaminants which may have been introduced. Any contaminants are trapped in a fluid bath 52 located between the seals 34, 36.

The probes 120 will then progress through the second seal 36, which will again further wipe the probes 120. Continued axial movement of the two portions towards one another results the exposed metal of the probe 120 in the gap 126 in the insulation aligning with and contacting the electrical contact pad 26 on the female portion 10, making an electrical connection.

To provide a visual indication that electrical contact has been made, the front face 140 of the male portion 100 contacts an outer step 54 on the female portion 10. This visual indication allows a diver, or the operator of a remotely operated vehicle (ROV) to check that the portions 10, 100 of the connector are fully mated and that electrical connection has been established.

As the pistons are forced backwards they expel the dielectric fluid through apertures 22 into the outer chamber 40. The pressure is balanced between the chambers 18 and 40 and the external seawater by the displacement of the membrane 38.

Similarly, the shuttle 110 of the male portion 100 is forced back against the force of the spring 112 and the membrane 130 is deformed outwards such that the pressure is balanced at the membrane 130 between the seawater and the dielectric fluid.

The disconnection process is simply a reversal of the mating process. A small axial force is applied to pull the portions 10, 100 apart. Although the force is preferably an axial one (ie there is no requirement for a push-turn-pull type of release, although this remains an option) should an electrical connecting cable attached to either one of the portions 10, 100 snag underwater, the force applied under these circumstances should not be sufficient to effect full release of the connector of the present invention.

As the portions 10, 100 come apart, the pistons 12 of the female portion 10 follow the probes 120, under the resilient bias of the spring 16. The pistons 12 pass through the seals 34, 36 and seal off the interior of the female portion 10 from contamination.

The shuttle 110 of the male portion 100 is forced towards the opening 114 by the resilience of the spring 112. As the shuttle 110 moves, the seals 116, 118 wipe the probes 120 clean of any contaminants. The chamber 128 is thereby kept free of contaminants.

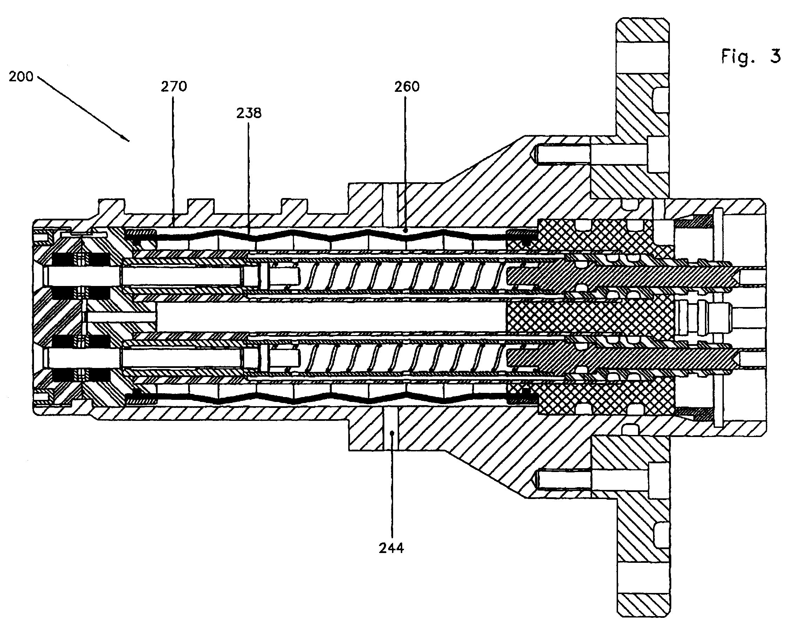

Fig. 3 shows an alternative female portion 200. The female portion 200 is generally the same as the female portion 10. Similar features are referenced by the same numeral prefixed 2. The main difference is the position of the flexible membrane 238 which is spaced from a sidewall 270 of the female portion 200 so that it can flex in a chamber 260 to enhance the pressure equalisation capability of the connector. Membrane 238 is also folded to give a greater flexibility. The folded shape of the membrane 238 resists sealing of the membrane 238 to the sidewall 270 of the female portion 200 and thereby blocking the apertures 244. It should be noted that the configuration of the membrane 238 may take any suitable form.

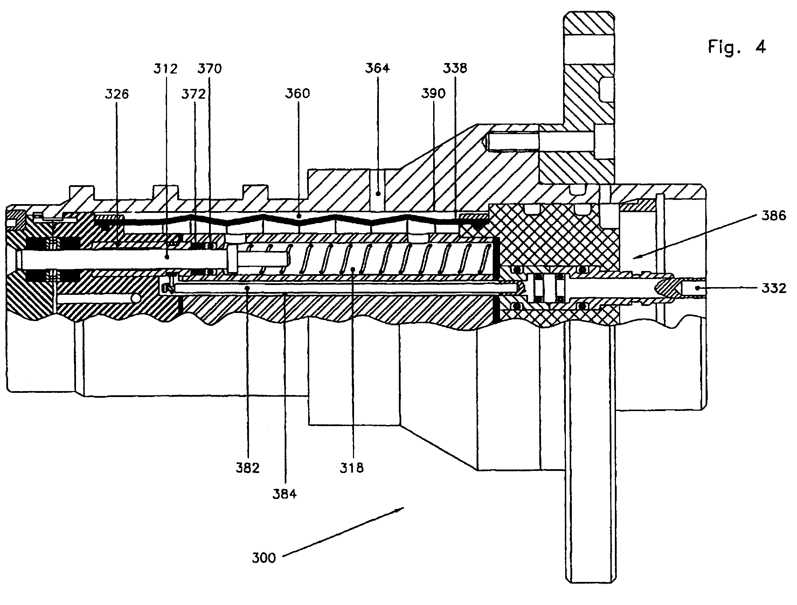

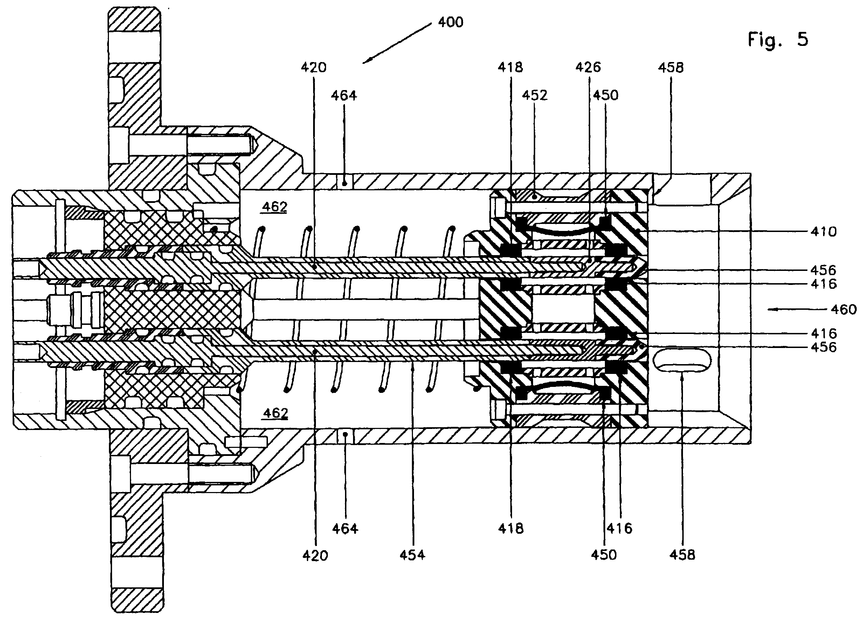

Referring now to Figs. 4 and 5, there is shown a further alternative embodiment of a female portion 300, and a male portion 400. The female portion 300 is similar to the female portions 10, 200 as previously described, with a piston 312 which is of an insulating material, and not electrically conductive. Seal 370 and insulator 372 isolate an electrical contact pad 326 from the first chamber 318 and the dielectric therein. This prevents any contamination in the dielectric in the first chamber 318 from contaminating the conductive surfaces of the contact pad 326, thereby reducing the possibility of short circuits between contact pads 326.

The contact pad 326 is located at one end of the chamber 318 which is filled with a dielectric, such as oil. The chamber 318 does not need to be pressure compensated as there is negligible displacement of dielectric when the probe 420 of the male portion 400 forces the piston 312 backwards during mating. This is because the probe 420 has a diameter which is substantially the same as that of the piston 312. Any contaminant introduced by the probe 420 will be prevented from transferring to the main chamber 318 by the seal 370 and insulator 372.

Each contact pad 326 is electrically connected to a conductor 382. As each conductor 382 is completely isolated from any external chambers containing dielectric or seawater, there is a reduced likelihood of any contaminants from entering chambers 384 in which the conductors 382 are located and causing short-circuits within the female portion 300.

The conductor 382 passes through a pressure barrier, generally designated 386, and terminates in, for example, a solder terminal 332.

As with the female portion 200 of Fig. 3, the membrane 338 is folded and also spaced from a sidewall 390 to allow the membrane 338 to move radially. The configuration and spacing also prevents the apertures 364 from becoming blocked by the membrane 338.

Fig. 5 shows the male portion 400 for mating with female portion 300 previously described with reference to Fig. 4. The male portion 400 is similar to that shown in Fig. 2, and like features have been referenced with the same numerals prefixed 4 instead of 1.

The male portion 400 does not need a main pressure compensation means because the pressure change which occurs when the portions 300, 400 are mated is substantially negligible. A smaller diaphragm 450 is optionally used as a pressure compensation means within the shuttle 410. Due to the small volume change, the diaphragm 450 can be reduced in size, thereby reducing the weight and over-all cost of the connector. The smaller diaphragm 450 is also less prone to failure.

A chamber (not shown) is accessible through apertures (not shown) in member 452 so that any fluid displaced during the mating of the portions 300, 400 can be accommodated.

The diaphragm 450 allows for slight seepage of seawater into the male portion 400 during mating and disconnection of the connector. In addition, the diaphragm 450 creates a pressure balance, particularly if airbubbles are created during mating or disconnection.

As the interior chamber 462 of the male portion 400 and the outer chamber 360 of the female portion 300 are normally filled with seawater, it may be preferable to provide compensation means outwith the portions 300, 400. Such pressure compensation means could be a bag for example in fluid communication with the chambers 360, 462 via apertures 364, 464 in the side walls of the portions 300, 400.

The probes 420 are substantially covered by an insulating material 454, except for a contact pad 426 as previously described. The contact pad 426 is preferably gold-plated to withstand the corrosive effects of the seawater and also to reduce wear when the connector is mated and disconnected frequently. The double seals 416, 418 in conjunction with the insulating material 454, with which the seals 416, 418 engage substantially isolate the probe contact pads 426 from the environment.

To enhance isolation of the probe 420 from the environment, the probes 420 have an insulating cap 456 provided over the tip of each probe 420. The insulating cap engages the front seal 416 and substantially prevents the ingress of seawater, silt and the like which may damage the contact pads 426 and adversely affect the durability and reliability of the connector.

The contact pad 426 is spaced from the tip of the probe 420. The insulating cap 456, coupled with the moveable shuttle 410, facilitates isolation of the male portion 400 both in the mated and disconnected conditions.

The male portion 400 is provided with a series of cut-outs 458 which, in this embodiment, are oval in shape, but could be of any shape. The cut-outs 458 allow the forward entry portion 460 to be cleaned out before mating using, for example, a water jet from a remotely operated vehicle (ROV). This allows the washout of silt or the like within the forward entry portion 460 which may adversely affect the mating or disconnection of the portions 300, 400.

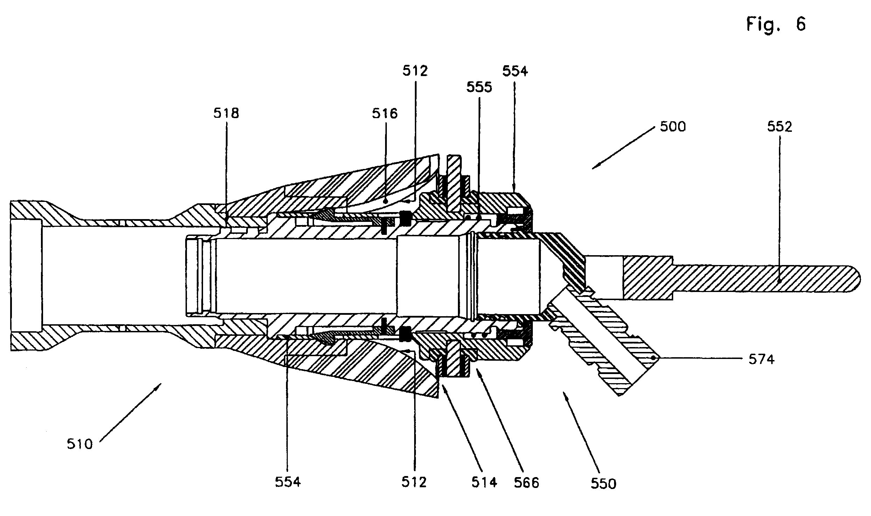

Referring now to Figs 6, 7 and 8 there is shown in cross-section an outer housing 500 for a connector, operable by an ROV (not shown), which comprises a housing for a female portion 510 and a housing for a male portion 550.

It will be appreciated by those skilled in the art that the housings 510, 550 will be provided with suitable internal components, preferably any of the features described previously, to enable electrical and/or optical contact to be made. However, these components have been omitted for clarity.

The female portion 510 is adapted to be retained in an underwater location, such as adjacent a well head for example. The male portion 550 is subsequently transported to the female portion 510 using an ROV and is thereafter attached as will be described.

The female portion 510 is provided with an internal guide face 512 which, in this example, is a tapered cone. The cone tapers from a wide outer entry port 514 to a narrower inner diameter which is substantially equal to the outside diameter of the mid-section of the male portion 550. A keyway guide slot 516 on the internal guide face 512 interengages with a key 518 to facilitate initial alignment of the male and female portions 550, 510.

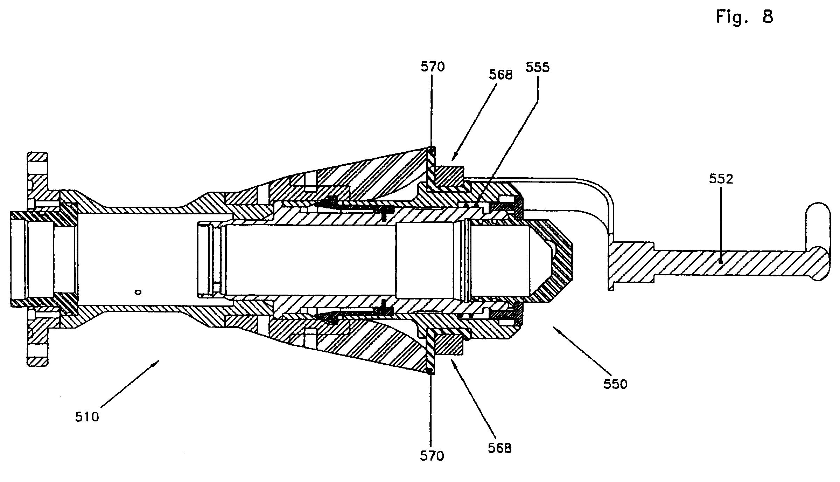

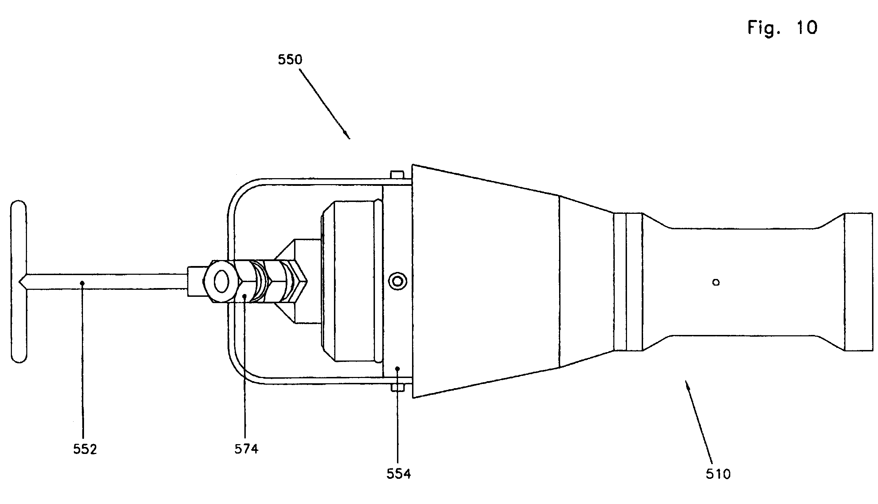

The male portion 550 has a handle 552 which is shaped to facilitate use by an ROV. The handle 552 is connected to an annular sleeve 554 to facilitate the disconnection of the male and female portion 550, 510 described hereafter. The annular sleeve 554 is resiliently biased by a spring member 555 which biasses the sleeve 554 away from the handle 552. As best shown in Figs 8 & 10, the handle 552 is attached to the sleeve 554 using any conventional means, such as rivets, nuts and bolts or the like.

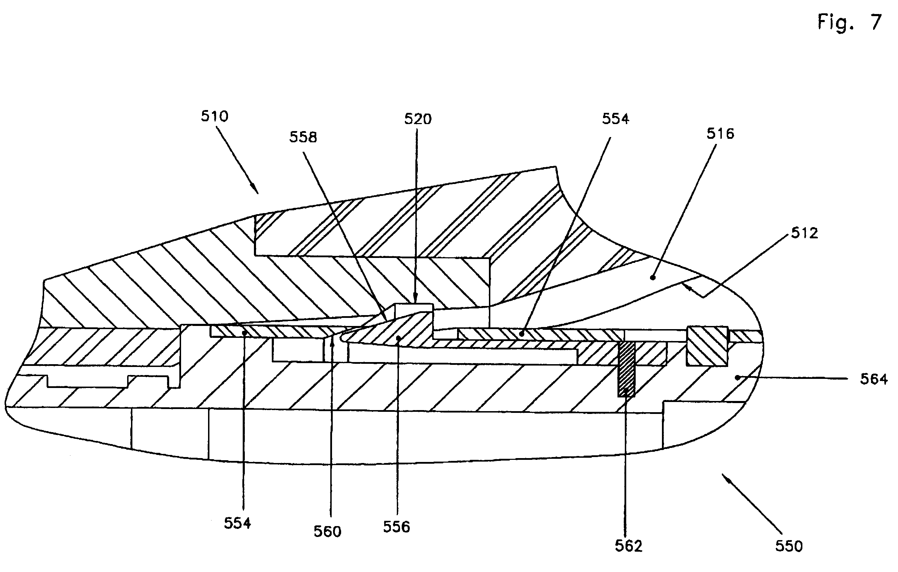

To lock the male and female portions 550, 510 together when mated, a latch 556, best shown in Fig. 7, is provided on the male portion 550. The latch 556 engages an annular groove 520 in the female portion 510. The latch 556 is spring loaded and biased expansively, so that the latch 556, without the application of any external forces, is biased radially outwards, away from the main body of the male portion 550.

The leading edge of the latch 556 is at the thin end of a wedge. A top face 558 of the wedge slopes upward from left to right (as shown in Fig. 7), so that when the top face 558 engages with the internal guide face 512 of the female portion 510, the latch 556 is forced downwards against the natural bias of the spring, allowing the male portion 550 to enter the female portion 510. Once mating is complete, the wedge moves radially outwards into the groove 520, thereby locking the male and female portions 550, 510 in the mated position, as shown in Fig. 7.

A plurality of such latches 556, for example four, can be provided on the male portion 550.

To release the latching mechanism, the handle 552 is simply pulled in an axial direction to separate the male and female portions 550, 510. This axial force moves the sleeve 554 in a direction from left to right as shown in Fig. 7. It should be noted that the size of the force must be sufficient to overcome the resilience of the biasing spring 555. A sloping face 560 on the sleeve 554 contacts the top face 558 of the latch 556 and sufficient pulling force on the handle 552 causes the latch 556 to be forced downwards against its natural resilience. Once the latch 556 is clear of the groove 520, the male portion 550 can be removed from the female portion 510.

In the event that the latching mechanism malfunctions and prevents disconnection of the portions 510, 550, a plurality of shear pins 562 are provided in the male portion 550. The pins 562 are designed to shear under sufficient pulling force applied to the handle 552. If, for any reason, the sleeve 554 does not move because it has become jammed with a build-up of silt or the like, continued pulling on the handle 552 can cause the shear pins 562 to break. When the pins 562 break, the main body 564 of the male portion 550 will be retracted and the sleeve 554 which is attached to the body 564 will come into contact with the latch 556 and facilitate disconnection of the portions 510, 550 as previously described.

The main advantage of the handle 552 and sleeve 554 combination is to prevent any unintentional release of the latching mechanism. If, for example, a diver or an ROV becomes entangled in the cable (not shown) attached through the cable housing 574, a force will be exerted on the male portion 550 at least a portion of which will be in the direction of disconnection. However, as the force has not been applied to the sleeve 554 via the handle 552, the sleeve 554 will not move and hence the sloping face 560 of the sleeve 554 will not contact the top face 558 of the latch 556. Therefore, the latching mechanism will not be released.

To prevent the ingress of contaminants which may prevent the latching mechanism from operating correctly, a dual-purpose resilient ring 566 may be used. The ring 566 as shown in Fig. 6 is designed to be resilient so that during mating, if slight misalignment occurs, the ring 566 will flex and substantially correct the misalignment. For example, if the male portion 550 is circumferentially displaced with respect to the female portion 510 during mating, when the key 516 engages the keyway 518, the resilient ring 566 will deform to bring the two portions 510, 550 into alignment. Thereafter, the resilience of the ring 566 will return it to its correct position, thus circumferentially moving the male portion 550 into alignment with the female portion 510.

In addition to this, or alternatively, a second resilient mounting ring 568 (as shown in Fig. 8) may be provided with an extended flange portion 570. The flange portion 570 substantially covers the wider outer entry port 514 of the female portion 510, thereby substantially preventing the ingress of contaminants.

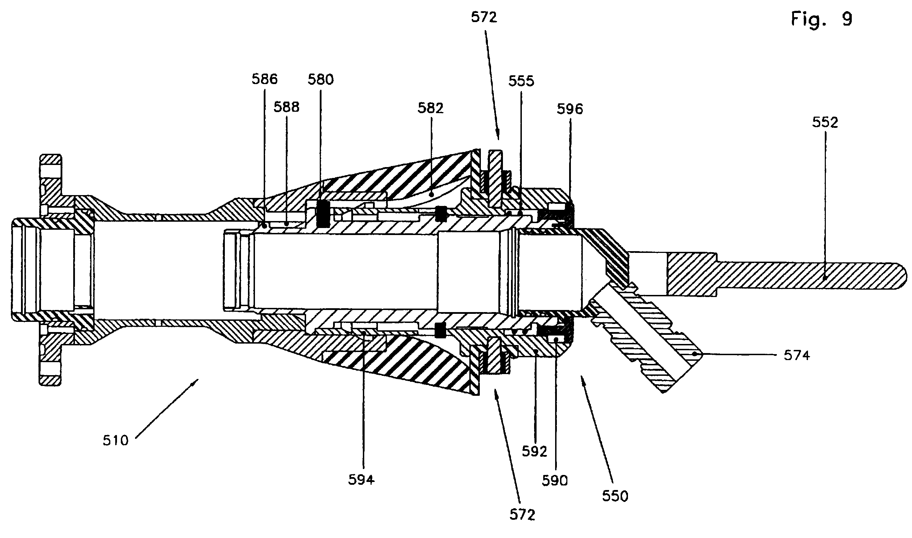

Seal 572 as shown in the embodiment of Fig. 9 shows a combination of a flexible seal and an extended flange portion which will prevent ingress of contamination, and also facilitate alignment of the male and female portions 550, 510.

The embodiment shown in Fig. 9 is provided with a dual-keyway system to aid the alignment process. The dual-keyway feature facilitates mating and disconnection by an ROV. A first key 580 and key guide 582 gives an initial alignment of the male and female portions 550, 510. The accuracy of the initial alignment is not critical as the second key 586 and key guide 588 give an accurate final alignment.

Two further modifications may be made to the embodiments shown in Figs 6, 8 and 9. Both modifications have the same function and allow the operator of the ROV to ensure that the male and female portions are correctly mated and further prevent unintentional disconnection.

Referring to Fig. 9, there is a shown a gap 590 formed between the sleeve member 594 and a retaining cap 596 on the male portion 550. If the small portion 592 at the outer edge of the sleeve member 594 is removed, a split ring (not shown) can be inserted in the gap 590. The split ring can prevent the sleeve member 594 from moving in response to an axial force applied to the handle 552. Thus, disconnection is not possible until the split ring is removed. The split ring would also allow a small axial force to be applied to the handle 552. This axial force would allow the operator of the ROV to ensure that the male and female portions 550, 510 were securely mated as the split ring would prevent release if the portions 550, 510 were correctly mated.

Any other device which could be inserted into the gap 590 may be used to substantially prevent the sleeve member 594 from moving to release the latches. Such devices include a pin (not shown) for example, the pin being inserted in a suitable aperture in the retaining cap 596. Any device which would fill the gap 590 may be used, or any other device which substantially prevents the sleeve 594 from moving axially to the release position.

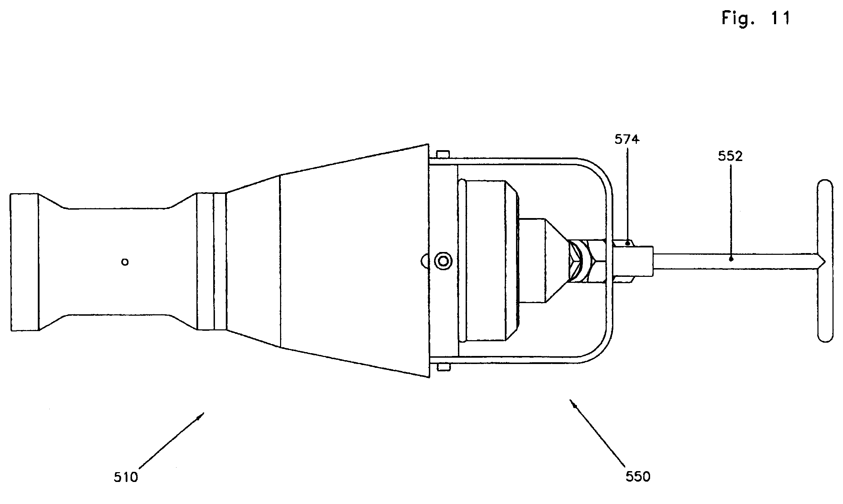

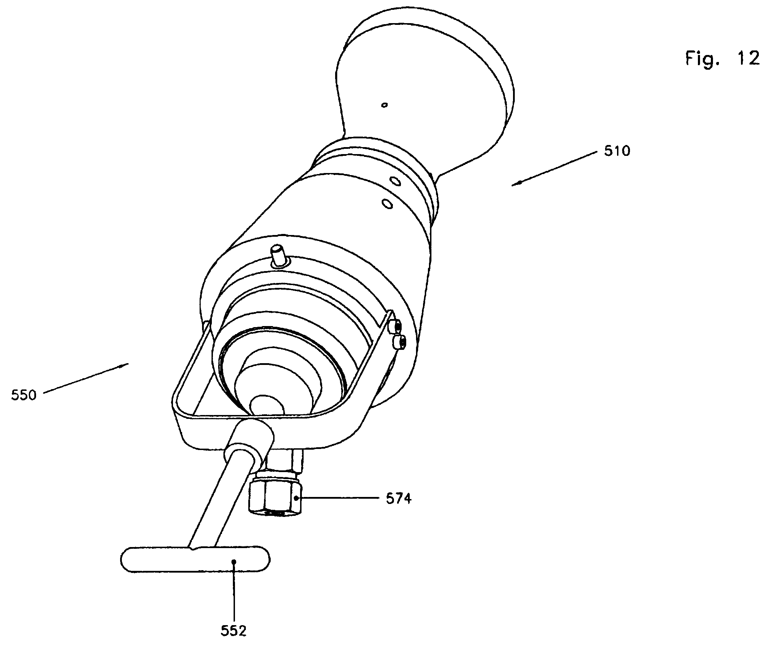

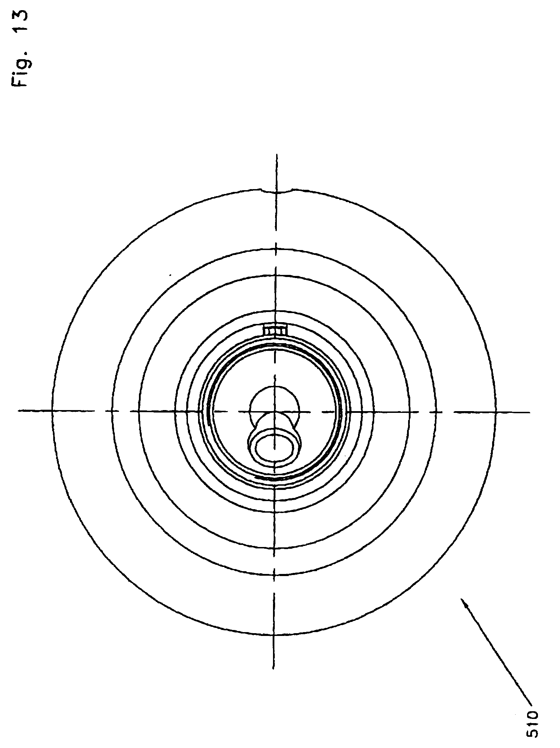

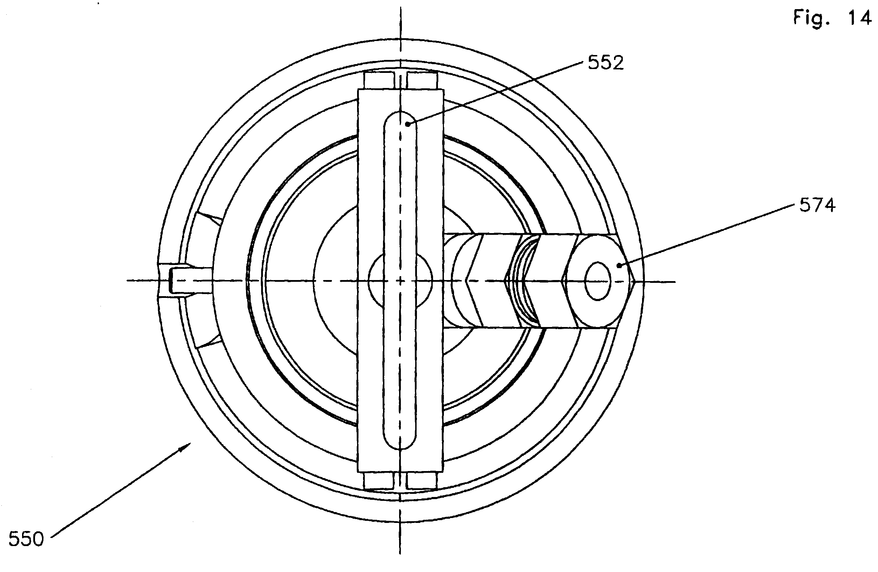

Figs 10 to 14 depict the external faces of the male and female portions 550, 510.

Hence there is provided a connector which is suitable for use in both air and underwater. The design is such that it may be mated by hand, or when underwater by a diver, or an ROV providing a suitable adaptor is used. Both the male and female portions of the connector can be sealed in a substantially fluid-tight manner from the aggressive surroundings which it may encounter.

The resilience of the springs within the male and female portions of the embodiments shown will facilitate disconnection as the natural bias will cause the male and female portions to push each other apart.

Furthermore, the fluid-tight seal allows the connector to be mated when "live". The seal arrangement also allows both portions of the connector to be left disconnected underwater, without causing damage to the connector and avoids the possibility of short circuits which may occur due to water being a conductor of electricity.

Although an electrical connector has been described, the same technology can be used with an optical or an electro-optical hybrid variant, with minor modifications.

Modifications and improvements may be made to the foregoing without departing from the scope of the present invention.

## Claims

1. An electrical and/or optical connector comprising a male portion (100, 400) and a female portion (10, 200, 300), the male portion (100, 400) being provided with at least one contact probe (120, 420) and the female portion (10, 200, 300) being provided with at least one socket, at least one of the male (100, 400) and female (10, 200, 300) portions being provided with a moveable shuttle (12, 110).

2. An electrical and/or optical connector according to claim 1, wherein the shuttle (12, 110) is resiliently biased towards an opening (14, 140) in the male (100, 400) or female (10, 200, 300) portion.

3. An electrical and/or optical connector according to any preceding claim, wherein the moveable shuttle includes a piston (12) which is resiliently biased to engage seals (34, 36, 116, 118) when in the disconnected condition.

4. An electrical and/or optical connector according to claim 3, wherein the piston (12) is biased by a spring (16).

5. An electrical and/or optical connector according to claim 3 or claim 4, wherein the piston (12) is disposed within a piston chamber (18) defined by one or more walls (20).

6. An electrical and/or optical connector according to claim 5, wherein the piston chamber (18) is at least partially filled with a dielectric.

7. An electrical and/or optical connector according to either claim 5 or claim 6, wherein the walls (20) include one or more apertures (22).

8. An electrical and/or optical connector according to any of claims 5 to 7, wherein as the piston (12) is forced backwards, fluid in the piston chamber (18) is expelled from the piston chamber (18) into an outer chamber (40).

9. An electrical and/or optical connector according to claim 8, wherein the piston chamber (18) and/or the outer chamber (40) includes a flexible membrane (38) forming a part of the boundary of the chamber (18, 40).

10. An electrical and/or optical connector according to claim 9, wherein the male (100, 400) and/or female (10, 200, 300) portion is provided with at least one vent hole (44, 136), the vent holes (44, 136) allowing pressure outwith the respective portion (10, 200, 300, 100, 400) to bear against the flexible membrane (38, 130).

11. An electrical and/or optical connector according to any preceding claim, wherein a fluid-tight seal (370, 372) is provided at an inner end of the shuttle (12).

12. An electrical and/or optical connector according to any preceding claim, wherein the shuttle (12) is forced into the respective portions during connection.

13. An electrical and/or optical connector according to any preceding claim, wherein the shuttle (12, 110) includes an axial wiper for removing contaminants when the shuttle (12, 110) moves.

14. An electrical and/or optical connector according to any preceding claim, wherein a flexible membrane (450) is located within the shuttle (410).

15. An electrical and/or optical connector according to claim 14, wherein pressure equalising means is provided on each side of the membrane (450) to provide a pressure balance within the shuttle (410).

16. An electrical and/or optical connector comprising a male portion (100, 400) and a female portion (10, 200, 300), the male portion (100, 400) being provided with at least one contact probe (120, 420) and the female portion (10, 200, 300) being provided with at least one socket, whereby the male portion (100, 400) and the female portion (10, 200, 300) interengage resulting in electrical and/or optical contact between them, each portion containing an insulating fluid.

17. An electrical and/or optical connector according to preceding claim, wherein a seal (34, 36, 116, 118) is provided at or near an open end (14, 140) to prevent contaminants from entering at least one of the male (100, 400) and female (10, 200, 300) portions.

18. An electrical and/or optical connector according to claim 17, wherein the seals (34, 36, 116, 118) are rectangular in cross-section.

19. An electrical and/or optical connector according to any preceding claim, including one or more contact pads (26) within the female portion (10, 200, 300).

20. An electrical and/or optical connector according to claim 19, wherein the contact pad (26) is isolated by a fluid-tight seal.

21. An electrical and/or optical connector according to claim 19 or claim 20, wherein the contact pad (26) is connected to external contacts (30) by a central conductor (382) in a conductor chamber (384) at least partially filled with a dielectric.

22. An electrical and/or optical connector according to any one of claims 17 to 21 when dependent on claim 17, wherein the seals (34, 36) abut an outer surface of the probe (120) of the male portion (100, 400) thereby preventing contaminants from entering the connector when the male (100, 400) and female portions (10, 200, 300) are mated.

23. An electrical and/or optical connector according to any preceding claim, wherein the or each probe (120) of the male portion (100, 400) is at least partially covered by an insulating material.

24. An electrical and/or optical connector according to claim 24 or claim 25, wherein a gap (126) is formed in the insulation such that electrical contact may be made with the female portion (10, 200, 300).

25. An electrical and/or optical connector according to any preceding claim, wherein the or each probe (120) of the male portion (100, 400) is located within a probe chamber (128) at least partially bounded by a flexible membrane (130).

26. An electrical and/or optical connector according to claim 25, wherein the probe chamber (128) is filled with a dielectric fluid.

27. An electrical and/or optical connector according to any preceding claim, wherein insulating material covers the tip of the or each probe (120).

28. An electrical and/or optical connector according to any preceding claim, wherein a front portion (460) of one of the portions (10, 100, 200, 300, 400) is provided with at least one aperture (458) to allow debris collected in the front portion (460) to be removed.

29. A connector according to any preceding claim, wherein the male and/or female portions (550, 510) incorporate at least one latch (556) on one of the male and female portions (550, 510) which engages with a corresponding groove (520) on the other of the male and female portions (550, 510).

30. A connector according to claim 29, wherein a sleeve member (554, 594) is provided to engage an edge of the latch (556) and facilitate release of the latch (556) from the groove (520).

31. A connector according to any preceding claim including at least one shear pin (562) provided on one of the male and female portions (550, 510).
